# EUROPÄISCHE PATENTANMELDUNG

(11) **EP 2 425 751 A1**
(43) Veröffentlichungstag der Anmeldung: **07.03.2012**
(21) Anmeldenummer: 10175650.0
(22) Anmeldetag: 07.09.2010
(51) Int. Cl.: A47J 27/18, A47J 37/12

(54) **Gerät und Verfahren zum Zubereiten von Speisen**

(71) Anmelder: Gastrofit AG, 9400 Rorschach (CH)
(72) Erfinder: Schlegel, Alexander, 9320, Arbon (CH)

(57) **Zusammenfassung**

Gerät (100) zum Zubereiten von Speisen, das ein Becken (101) zur Aufnahme einer Flüssigkeit und einer Speise, eine Heizvorrichtung zum Erhitzen der Flüssigkeit und eine Kontrollvorrichtung (110) zum Kontrollieren des Erhitzens der Flüssigkeit umfasst. Das Gerät (100) weist einen Induktivsensor (120) mit Aktivzone auf, die eine Ringform hat und einen Öffnung (121) umgibt. Die Aktivzone des Induktivsensors (120) ist so in dem Becken (101) angeordnet, dass die Öffnung (121) von der Flüssigkeit durchdringbar ist. Der Induktivsensor (120) ist schaltungstechnisch mit der Kontrollvorrichtung (110) verbunden, wobei der Induktivsensor (120) Messinformation für die Kontrollvorrichtung (110) bereit stellt, die mit der momentanen Leitfähigkeit der Flüssigkeit im Becken (101) korreliert ist.

## Beschreibung

Gegenstand der Erfindung ist ein Gerät zum Zubereiten von Speisen und ein entsprechendes Verfahren. Insbesondere geht es um einen Nudelkocher, der automatisiert betrieben werden kann.

In Grossküchen, aber auch im Privatbereich besteht der Bedarf für Kochgeräte, die zum automatisierten Zubereiten von Speisen ausgelegt sind. Häufig beschränkt sich die Automatisierung bisher jedoch darauf, das Gerät mit einem Temperatursensor, einer Temperatursteuerung und einer Zeitüberwachung ausgestattet ist.

Speziell beim Zubereiten von Nudelgerichten ist aber nicht nur die Temperatur und die Kochzeit von ausschlaggebender Bedeutung, sondern es spielt hier auch der Salzgehalt der Kochflüssigkeit (typischerweise Wasser) eine Rolle. Untersuchungen haben gezeigt, dass es mit herkömmlichen Geräten - vor allem in Küchen mit einem grossen Durchsatz an Speisen - schwierig ist, Nudelgerichte in gleichbleibender und reproduzierbarer Qualität frisch zuzubereiten. Das scheint unter anderem daran zu liegen, dass einerseits permanent Kochwasser verdampft, was zu einer Erhöhung der Salzkonzentration im verbleibenden Kochwasser führt, und dass andererseits Salz zusammen mit den Nudelgerichten aus dem Wasser entnommen wird, was den Salzgehalt im Wasser reduziert. Unter diesem Umständen sind in einem halbautomatisierten oder komplett automatisierten Umfeld keine gleichbleibenden und reproduzierbaren Ergebnisse zu erzielen.

In den beschriebenen Geräten ergeben sich wegen der hohen Temperaturen und wegen des Gebrauchs von Ölen und Fetten schwierige Umgebungsbedingungen, die eine einfache Ermittlung des Salzgehalts erschweren.

Es stellt sich daher die Aufgabe ein Gerät zum Zubereiten von Speisen bereit zu stellen, bei dem der jeweilige Salzgehalt, respektive die Salzkonzentration einfach und zuverlässig zu ermitteln ist. Insbesondere geht es darum einen entsprechenden Nudel- oder Pastakocher bereit zu stellen, der automatisiert betrieben werden kann. Ausserdem geht es darum, ein entsprechendes automatisiertes Verfahren bereit zu stellen.

Ein entsprechendes Gerät wird durch die Merkmale des Hauptanspruchs gekennzeichnet. Es umfasst einen Induktivsensor mit Aktivzone, die eine Ringform aufweist und eine Öffnung umgibt. Die Aktivzone des Induktivsensors ist so in einem Becken des Geräts angeordnet, dass die Öffnung von der (Koch-) Flüssigkeit durchdringbar ist. Der Induktivsensor ist so schaltungstechnisch mit einer Kontrollvorrichtung verbunden, dass der Induktivsensor Messinformation an die Kontrollvorrichtung abgibt, die mit der momentanen Leitfähigkeit und somit auch mit dem Salzgehalt der Flüssigkeit im Becken korreliert ist.

Bevorzugte Ausführungsformen sind den Unteransprüchen zu entnehmen.

Weitere Einzelheiten und Vorteile der Erfindung werden im Folgenden anhand von Ausführungsbeispielen und mit Bezug auf die Zeichnung beschrieben.
- **Fig. 1**: zeigt eine perspektivische Ansicht eines Geräts mit einer Wanne, einem Korb zur Aufnahme von Speisen, dem Kontrollpanel einer Kontrollvorrichtung und einem Induktivsensor;
- **Fig. 2A**: zeigt eine perspektivische Ansicht eines bevorzugten Induktivsensors,
- **Fig. 2B**: zeigt eine Seitenansicht des Induktivsensors nach Fig. 2A,
- **Fig. 2C**: zeigt eine Draufsicht des Induktivsensors nach Fig. 2A;
- **Fig. 3**: zeigt eine stark schematisierte Ansicht mit Details des Induktivsensors, der Kontrollvorrichtung und einer Anzeige;
- **Fig. 4**: zeigt eine stark schematisierte Ansicht mit Details des Induktivsensors, der Kontrollvorrichtung, eines Salzsteuermoduls und einer steuerbaren Salzzufuhr.

Die Erfindung wird im Folgenden anhand von Ausführungsbeispielen beschrieben.

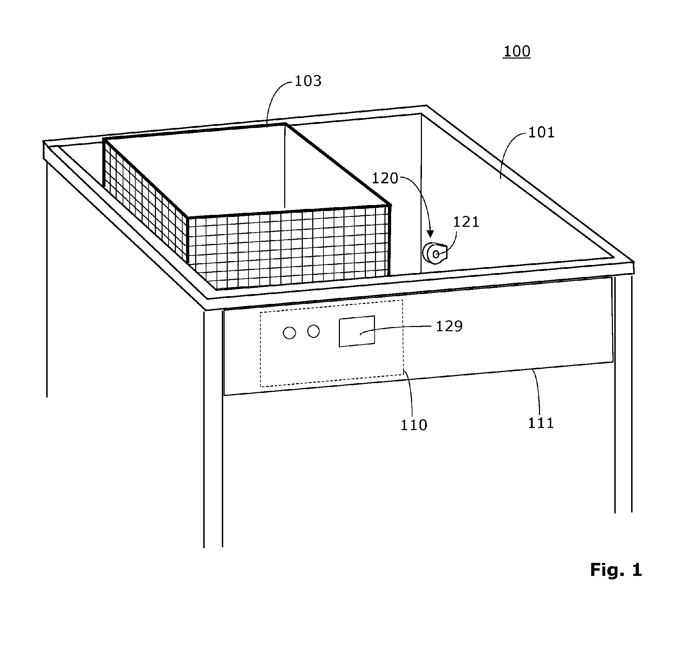

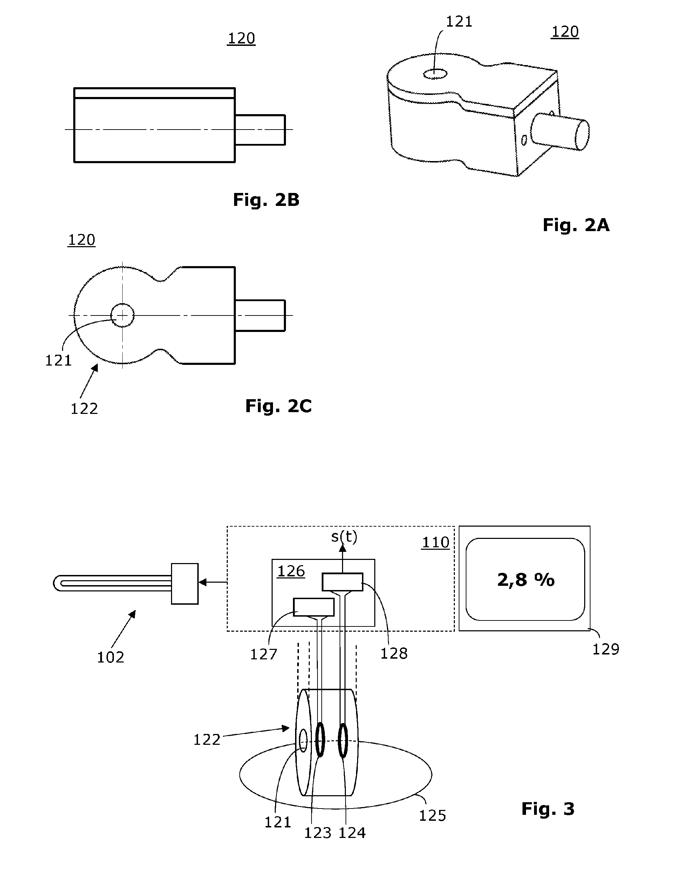

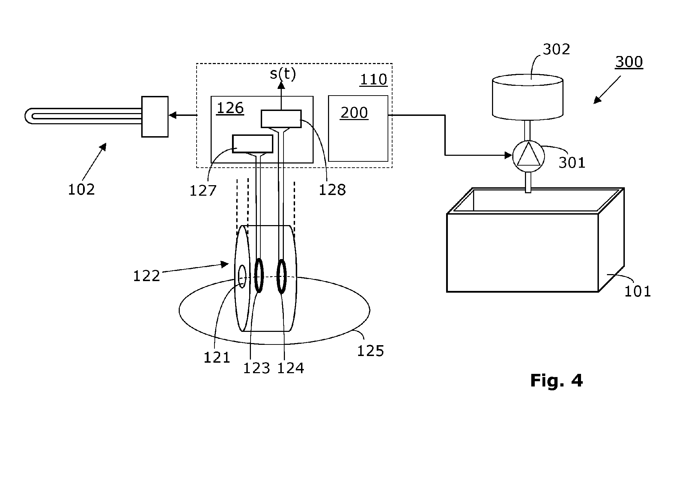

In Fig. 1 ist ein beispielhaftes Gerät 100 gezeigt. Das Gerät 100 ist zum Zubereiten von Speisen ausgelegt. Es umfasst ein Becken 101 zur Aufnahme einer Flüssigkeit (vorzugsweise Wasser und/oder Öl). Die zuzubereitende Speise wird entweder direkt in die Flüssigkeit eingebracht, oder es kommt ein Korb 103 oder Sieb zum Einsatz. Der Korb 103 oder das Sieb kann auch für kleinere Portionen eingeteilt oder unterteilt sein. Das Gerät 100 umfasst weiterhin eine Heizvorrichtung 102 (siehe Fig. 3 und 4) zum Erhitzen der Flüssigkeit und eine Kontrollvorrichtung 110 zum Kontrollieren des Erhitzens der Flüssigkeit. Die Kontrollvorrichtung 110 kann zum Beispiel hinter einen Kontrollpanel 111 sitzen. Das Kontrollpanel 111 kann mehrere Knöpfe, Schalter und Anzeigeelement (wie z.B. eine Anzeige 129) umfassen.

Die Heizvorrichtung 102 ist nicht in Fig. 1 gezeigt, da sie typischerweise im Inneren des Geräts 100 oder im Obenbereich des Beckens 101 sitzt. Es ist auch möglich die Heizvorrichtung in dem Becken 101 zu platzieren. Es sind zahlreiche verschiedene Heizvorrichtungen bekannt, die hier eingesetzt werden können. Besonders bevorzugt sind Teleskopheizelemente.

Das Gerät 100 ist mit einem speziellen Induktivsensor 120 ausgestattet, der eine sogenannte Aktivzone 122 umfasst. Als Aktivzone 122 wird derjenige Bereich des Induktivsensors 120 bezeichnet, der elektro-magnetisch aktiv ist, d.h. der ein elektromagnetisches Feld abstrahlt.

Die Aktivzone 122 des Induktivsensors 120 weist vorzugsweise bei allen Ausführungsformen eine Ringform auf, die einen Öffnung 121 umgibt, wie in Fig. 1 andeutungsweise zu erkennen ist. Details einer bevorzugten Ausführungsform des Induktivsensors 120 sind den Figuren 2A, 2B und 2C zu entnehmen.

Der Induktivsensor 120 kann in den seitlichen Wänden oder im Bodenbereich des Beckens 101 sitzen.

Die Aktivzone 122 des Induktivsensors 120 ist so in dem Becken 101 angeordnet, dass die Öffnung 121 von der Flüssigkeit durchdringbar ist. Die Flüssigkeit kann in der Öffnung 121 stehen oder sie durchfliessen. Ausserdem ist der Induktivsensor 120 so schaltungstechnisch mit der Kontrollvorrichtung 110 verbunden, dass der Induktivsensor 120 Messinformation s(t) an die Kontrollvorrichtung 110 liefert, die mit der momentanen Leitfähigkeit der Flüssigkeit im Becken 101 korreliert ist. D.h. die Messinformation s(t) lässt eine Aussage über die momentane Leitfähigkeit zu.

Die Leitfähigkeitmessung ermöglicht eine Aussage über die Anzahl der in der Flüssigkeit gelösten (Salz-)Ionen.

Untersuchungen haben gezeigt, dass die typische Konzentration beim Kochen von Nudelgereichten zwischen 2 bis 5% Kochsalz in Leitungswasser beträgt. Um diesen Konzentration überhaupt messen zu können, kommt ein spezieller Induktivsensor 120 zum Einsatz, der einen Messbereich für die Leitfähigkeit der entsprechenden Flüssigkeit zwischen 1 mS/cm und 1000 mS/cm, und besonders vorzugsweise zwischen 10 mS/cm und 200 mS/cm aufweist. Diese Empfindlichkeitsbereiche sind besonders geeignet, um im einem Gerät 100 zuverlässig die Salzkonzentration auf dem Umweg über die Leitfähigkeit ermitteln zu können.

Reinstwasser hat eine Leitfähigkeit im Bereich von ca. 0,05 µS/cm. Die Leitfähigkeit von entsalztem Wasser liegt im Bereich von ca. 10 µS/cm.

Die Grundfunktion der Messprinzips, das hier zur Anwendung kommt, basiert darauf, dass zwei gekoppelte Spulen zum Einsatz kommen, die quasi wie ein Transformator arbeiten. Die Anwesenheit einer gut leitfähigen Flüssigkeit verbessert das Koppelverhältnis, was sich elektrisch schaltungstechnisch auswerten lässt.

Der Induktivsensor 120 kann eine Schaltung 126 umfassen, die vorzugsweise mit einer Gleichspannung von 24V, betrieben wird und ein Gleichspannungsausgangssignal im Bereich zwischen 0,1 und 2V liefert. Die Messgenauigkeit liegt dabei im Bereich von einigen wenigen Prozent.

Der Induktivsensor 120 kann aber auch eine Schaltung 126 umfassen, die mit einer Wechselspannung, betrieben wird.

Vorzugsweise umfasst der Induktivsensor 120 eine Primärspule 123, die eine oder mehrere Windungen aufweist und die Öffnung 121 umschliesst. Die Primärspule 123 ist schaltungstechnisch so durch die Schaltung 126 mit einer Wechselgrösse beaufschlagbar, dass in der Flüssigkeit, welche die Öffnung 121 durchdringt, ein kreisförmiger Stromfluss (Wirbelstrom) induzierbar ist. Dieser kreisförmige Stromfluss dient quasi als Sekundärspule des erwähnten Transformators.

Bei anderen Ausführungsformen umfasst der Induktivsensor 120 ein Primärspule 123 und eine Sekundärspule 124, die im Inneren der Aktivzone 122 angeordnet sind. Die Primärspule 123 ist als Erregerspule so schaltungstechnisch mit einer Wechselgrösse beaufschlagbar, dass ein Stromfluss in der Sekundärspule 124 induzierbar ist. Der Stromfluss in der Sekundärspule 124 ist je nach Kopplungsfaktor unterschiedlich gross. Der Kopplungsfaktor hängt ab von der Leitfähigkeit der Flüssigkeit, da durch Induktion in der Flüssigkeit Energie auf die Sekundärspule 123 übertragen wird. Ein entsprechendes Funktionsschema ist in Fig. 3 gezeigt. In Inneren der Aktivzone 122 des Induktivsensors 120 sitzen die Primärspule 123 und die Sekundärspule 124. Diese beiden Spule 123, 124 umgreifen die Öffnung 121 und sind co-axial zu einer virtuellen Achse angeordnet, die hier durch die leitfähige Flüssigkeit im Inneren der Öffnung 121 gebildet wird. Die Flüssigkeit im Inneren der Öffnung 121 ist leitfähig wenn Sie Salzionen enthält.

Durch die Flüssigkeit hindurch wird ein Stromfluss induziert, der in Fig. 3 durch einen Kreis 125 schematisch dargestellt ist. Der Stromfluss koppelt die beiden Spulen 123, 124 miteinander. Um so höher die Leitfähigkeit ist, um so besser ist diese Kopplung zwischen den Spulen 123, 124. Die Kontrollvorrichtung 110 umfasst eine Schaltung 126 zur Ansteuerung und zum Auslesen der Spulen 123, 124. Die Schaltung 126 umfasst einen Sender 127, der ein Wechselspannungssignal in die Primärspule 123 einprägt. Weiterhin umfasst die Schaltung 126 einen Empfänger 128, der ein Wechselsignal (Spannung oder Strom) von der Sekundärspule 124 empfängt. Der Empfänger 128 gibt ein Signal s(t) aus, das Messinformation enthält. Diese Messinformation wird an die Kontrollvorrichtung 110 übergeben. Die Kontrollvorrichtung 110 zeigt entweder den Salzgehalt auf einer Anzeige 129 an, wie in Fig. 3 angedeutet (hier mit dem beispielhaften Wert 2,8 %), und/oder die Kontrollvorrichtung 110 interagiert mit einem Salzsteuermodul 200, das in Fig. 4 gezeigt ist.

Das Salzsteuermodul 200 kann schaltungstechnisch mit einer steuerbaren Salzzufuhr 300 verbunden sein, die eine Pumpe 301, vorzugsweise eine Quetschpumpe, umfasst, um das Salz oder die Salzlösung aus einem Vorrat 302 entnehmen und in das Becken 101 einbringen zu können. Dieser Ansatz ist in Fig. 4 in schematischer Form dargestellt.

Bei allen Ausführungsformen handelt es sich bei der Primärspule 123 um eine wechselspannungserregte Spule.

Die beiden beschriebenen Wege zu induktiven Leitfähigkeitsmessung ergeben fast unabhängig von der Verschmutzung des Induktivsensors 120 eine Messinformation, die genau der Leitfähigkeit der Flüssigkeit entspricht, bzw. aus der sich die Leitfähigkeit der Flüssigkeit errechnen lässt. Die Leitfähigkeit ist mit der Salz-Konzentration korreliert.

Vorzugsweise beträgt die Messgeschwindigkeit der Schaltung 126 ca. 0,1 Hz. Der Arbeitstemperaturbereich des Induktivsensors ist vorzugsweise auf den Bereich +10 bis 120°C festgelegt.

Vorzugsweise umfasst das Gerät 100 eine Kontrollvorrichtung 110, die neben einer automatischen Temperaturregulierung auch eine automatisch Salzgehaltsregulierung (z.B. gemäss Fig. 4) umfasst. Die Salzgehaltsregulierung nutzt Messinformation s(t), die von dem Induktivsensor 120, respektive von der Schaltung 126 geliefert wird. Die Salzgehaltsregulierung umfasst vorzugsweise ein Salzsteuermodul 200 und eine steuerbare Salzzufuhr 300, wie z.B. in Fig. 4 gezeigt.

Mit einem Gerät 100 kann ein Verfahren zum Zubereiten von Speisen realisiert werden, das die folgenden grundlegenden Schritte umfasst:
- Beaufschlagen der Primärspule 123 des Induktivsensors 120 mit einer Wechselspannungsgrösse,
- Auswerten einer Wechselgrösse (Spannung oder Strom), die an der Sekundärspule 124 abgegriffen wird, wobei die Primärspule 123 und die Sekundärspule 124 durch die Flüssigkeit gekoppelt sind, wie beschrieben,
- Ermitteln eines Wertes aus der Wechselgrösse, der mit der gegenwärtigen Leitfähigkeit der Flüssigkeit korreliert ist,
- Falls die Leitfähigkeit unterhalb eines vorgegebenen Mindestwertes liegt (z.B. unter 1%), Erhöhen der Anzahl von Salzionen in der Flüssigkeit durch das Hinzufügen von Salz und/oder Salzlösung.

Das Erhöhen der Anzahl von Salzionen in der Flüssigkeit kann z.B. mittels eines Salzsteuermoduls 200 automatisch erfolgen. Die Leitfähigkeit der Flüssigkeit wird in diesem Fall erhöht, indem Salz oder Salzlösung aus dem Reservoir 302 nachgefüllt wird.

Vorzugsweise umfasst das Gerät 100 eine Trockengangsicherung, die Messinformation des Induktivsensors 120 auswertet. Die Messinformation s(t) ändert sich nämlich deutlich, wenn der Flüssigkeitsspiegel so stark absinken sollte, dass der Induktivsensor 120 trocken liegt.

Es ist ein Vorteil der Erfindung, dass das Gerät 100 reinigungsfreundlich ist. Ausserdem wird durch die Auslegung und Anordnung des Induktivsensors 120 sicher gestellt, dass Verunreinigungen am Sensor 120, wie z.B. Kalkablagerungen, keinen spürbaren Einfluss auf die Genauigkeit der Leitfähigkeitsmessung (z.B. der Salzkonzentrationsmessung) haben.

Weitere Vorteile sind im Folgenden aufgelistet:
- Der Induktivsensor 120 kann komplett in einem lebensmitteltauglichen Material gekapselt sein. Vorzugsweise kommt bei allen Ausführungsformen der Erfindung ein Gehäuse aus PEEK-Material (Polyetheretherketon), ETFE-Material (Ethylen-Tetrafluorethylen) oder Teflon™-Material zum Einsatz, um einerseits die Lebensmitteltauglichkeit gewähren zu können, und um andererseits das Gerät 100 bei Temperaturen von bis zu 180°C (vorzugsweise in einem Bereich zwischen +10 bis 120°C) betreiben zu können.
- Bedingt durch die Messmethode und Bauform des Induktivsensors 120 ist der direkte Kontakt der Flüssigkeit mit der Primärspule 123 oder mit Primär- und Sekundärspule 123, 124 ausgeschlossen.
- Der Induktivsensor 120 ist nahezu unempfindlich gegen Verschmutzung.
- Der Induktivsensor 120 ist auch unempfindlich gegen die Anwesenheit von Speisen (z.B. Kochgut).
- Der Induktivsensor 120 ist auch unempfindlich gegen Öle und Eiweisse, Kalkablagerungen und Zucker- sowie Stärkearten.
- Durch das induktives Messprinzip ergibt sich ein geringer Wartungs- und Reinigungsaufwand.
- Das Gerät 100 ermöglicht eine kontinuierliche oder getaktete Messung.

Das Prinzip der Erfindung lässt sich auch auf ein Fritiergerät anwenden, wobei Öl als Flüssigkeit zum Einsatz kommt. Bei Fritieröl mit Salz gelten jedoch etwas andere Werte für die Leitfähigkeit. Der Induktivsensor 120 und/oder die Schaltung 126 muss daher entsprechend anders dimensioniert werden.

## Patentansprüche

1. Gerät (100) zum Zubereiten von Speisen, das ein Becken (101) zur Aufnahme einer Flüssigkeit und einer Speise, eine Heizvorrichtung (102) zum Erhitzen der Flüssigkeit und eine Kontrollvorrichtung (110) zum Kontrollieren des Erhitzens der Flüssigkeit umfasst, **dadurch gekennzeichnet, dass**
- das Gerät (100) einen Induktivsensor (120) mit Aktivzone (122) umfasst,
- die Aktivzone (122) des Induktivsensors (120) eine Ringform aufweist, die einen Öffnung (121) umgibt,
wobei die Aktivzone (122) des Induktivsensors (120) so in dem Becken (101) angeordnet ist, dass die Öffnung (121) von der Flüssigkeit durchdringbar ist, und wobei der Induktivsensor (120) so schaltungstechnisch mit der Kontrollvorrichtung (110) verbunden ist, dass der Induktivsensor (120) Messinformation (s(t)) für die Kontrollvorrichtung (110) bereit stellt, die mit der momentanen Leitfähigkeit der Flüssigkeit im Becken (101) korreliert ist.

2. Gerät (100) nach Anspruch 1, **dadurch gekennzeichnet, dass** es ein Salzsteuermodul (200) umfasst, das Teil der Kontrollvorrichtung (110) ist oder das mit der Kontrollvorrichtung (110) schaltungstechnisch verbindbar ist, wobei die Messinformation (s(t)) mit der momentanen Leitfähigkeit der Flüssigkeit im Becken (101) und die Leitfähigkeit mit dem momentanen Salzkonzentration der Flüssigkeit im Becken (101) korreliert ist.

3. Gerät (100) nach Anspruch 1 oder 2, **dadurch gekennzeichnet, dass** der Induktivsensor (120) einen Primärspule (123) umfasst, die eine oder mehrere Windungen aufweist und die Öffnung (121) umschliesst, wobei die Primärspule (123) schaltungstechnisch so mit einer Wechselgrösse beaufschlagbar ist, dass in der Flüssigkeit, welche die Öffnung (121) durchdringt, ein kreisförmiger Stromfluss (125) induzierbar ist.

4. Gerät (100) nach Anspruch 1 oder 2, **dadurch gekennzeichnet, dass** der Induktivsensor (120) einen Primärspule (123) und eine Sekundärspule (124) umfasst, wobei die Kopplung der beiden Spulen (123, 124) von der momentanen Leitfähigkeit der Flüssigkeit abhängt, welche die Öffnung (121) durchdringt.

5. Gerät (100) nach einem der vorhergehenden Ansprüche, **dadurch gekennzeichnet, dass** es eine steuerbare Salzzufuhr (300) umfasst, die von der Kontrollvorrichtung (110) her ansteuerbar ist, um durch Abgabe von Salz oder einer Salzlösung die Salzkonzentration der Flüssigkeit in dem Becken (101) erhöhen zu können.

6. Gerät (100) nach Anspruch 5, **dadurch gekennzeichnet, dass** die steuerbare Salzzufuhr (300) eine Pumpe (301), vorzugsweise eine Quetschpumpe, umfasst, um das Salz oder die Salzlösung aus einem Vorrat (302) entnehmen und in das Becken (101) einbringen zu können.

7. Gerät (100) nach einem der vorhergehenden Ansprüche, **dadurch gekennzeichnet, dass** der Induktivsensor (120) einen Messbereich für die Leitfähigkeit der Flüssigkeit zwischen 1 mS/cm und 1000 mS/cm, und besonders vorzugsweise zwischen 10 mS/cm und 200 mS/cm aufweist.

8. Gerät (100) nach einem der vorhergehenden Ansprüche, **dadurch gekennzeichnet, dass** es
- ein wannenförmiges Becken (101), vorzugsweise aus Edelstahl, und/oder
- ein Sieb, und/oder
- einen Korb (103)
zur Aufnahme der Speisen umfasst.

9. Gerät (100) nach einem der vorhergehenden Ansprüche, **dadurch gekennzeichnet, dass** es als Nudelkocher ausgelegt ist, wobei Wasser als Flüssigkeit zum Einsatz kommt.

10. Gerät (100) nach einem der vorhergehenden Ansprüche 1 bis 7, **dadurch gekennzeichnet, dass** es als Fritiergerät ausgelegt ist, wobei Öl als Flüssigkeit zum Einsatz kommt.

11. Verfahren zum Zubereiten von Speisen in einem Gerät (100), das ein Becken (101) zur Aufnahme einer Flüssigkeit und einer Speise, eine Heizvorrichtung (102) zum Erhitzen der Flüssigkeit und eine Kontrollvorrichtung (110) zum Kontrollieren des Erhitzens der Flüssigkeit umfasst, **gekennzeichnet durch** die folgenden Schritte:
- Beaufschlagen einer Primärspule (123) eines Induktivsensors (120) mit einer Wechselspannungsgrösse,
- Auswerten einer Wechselgrösse, die an einer Sekundärspule (124) abgegriffen wird, wobei die Primärspule (123) und die Sekundärspule (124) **durch** die Flüssigkeit gekoppelt sind,
- Ermitteln eines Wertes aus der Wechselgrösse, der mit der gegenwärtigen Leitfähigkeit der Flüssigkeit korreliert ist,
- Falls die Leitfähigkeit unterhalb eines vorgegebenen Mindestwertes liegt, Erhöhen der Anzahl von Salzionen in der Flüssigkeit **durch** das Hinzufügen von Salz und/oder Salzlösung.

12. Verfahren nach Anspruch 11, **dadurch gekennzeichnet, dass** mittels eines Salzsteuermoduls (200) automatisch die Leitfähigkeit der Flüssigkeit erhöht, indem Salz oder Salzlösung aus einem Reservoir (302) nachgefüllt wird.
